# EUROPÄISCHE PATENTSCHRIFT

(11) **EP 3 222 396 B1**
(45) Veröffentlichungstag und Bekanntmachung des Hinweises auf die Patenterteilung: **01.08.2018**
(21) Anmeldenummer: 17151331.0
(22) Anmeldetag: 13.01.2017
(51) Int. Cl.: B28C 5/42

(54) **FAHRMISCHER**
MIXER TRUCK
BÉTONNIÈRE

(30) Priorität: 21.03.2016 DE 202016001857 U
(43) Veröffentlichungstag der Anmeldung: 27.09.2017
(73) Patentinhaber: Liebherr-Mischtechnik GmbH, 88427 Bad Schussenried (DE)
(72) Erfinder: Ruf, Berthold, 88477 Schwendi-Schönebürg (DE)
(74) Vertreter: Laufhütte, Dieter

(56) Entgegenhaltungen:
- EP-A2- 2 322 332

## Beschreibung

Die Erfindung betrifft einen Fahrmischer mit Aufbauten, die über einen Hilfsrahmen auf dem Fahrgestellrahmen eines Fahrgestells befestigt sind, wobei die Aufbauten Trommellagerböcke zur Aufnahme der Mischertrommel umfassen.

Üblicherweise ist bei einem Fahrmischer auf einem Fahrgestell ein so genannter Mischerhilfsrahmen und eine Mischertrommel aufgebaut, welche über einen vorderen und einen hinteren Trommellagerbock auf dem Mischerhilfsrahmen angeordnet ist. Dabei ist zumindest der hintere Trommellagerbock über elastische, formschlüssige Verbindungen auf Längsträgern des Mischerhilfsrahmens befestigt.

Zunächst wurden Fahrmischer eingesetzt, bei welchen die Trommellagerböcke fest mit dem Mischerhilfsrahmen verschweißt sind. Damit wurde eine in alle Richtungen feste Krafteinleitung realisiert. Allerdings kam es durch Verformungen im Fahrgestell des Trägerfahrzeugs zu Spannungen und Rissen in den Verbindungsschweißnähten.

Daher wurden die Trommellagerböcke über elastische Verbindungen auf dem Mischerhilfsrahmen befestigt. Dabei ist üblicherweise ein Formstück vorgesehen, welches am Trommellagerbock festgeschweißt ist und mit welchem dieser in einem Gegenstück aufliegt, welches außen am Mischerhilfsrahmen angeschweißt ist. Mit diesem Formstück wird der Trommellagerbock in seiner Position zum Mischerhilfsrahmen formschlüssig fixiert. Weiterhin ist eine Bügelschraube vorgesehen, welche den Trommellagerbock und das Gegenstück am Mischerhilfsrahmen umgreift und so den Trommellagerbock und den Hilfsrahmen zueinander verspannt.

Eine solche elastische, formschlüssige Verbindung ist für geringere Relativbewegungen, die zwischen Trommellagerbock und Rahmen entstehen können, unempfindlich. Die bekannte Konstruktion mit einem an der Außenseite der Längsträger des Mischerhilfsrahmens angeschweißten Gegenstück weist jedoch sowohl hinsichtlich des Bauraums, als auch hinsichtlich der Krafteinleitung Nachteile auf.

Darüber hinaus werden Fahrmischeraufbauten auf Fahrgestellen verschiedener Hersteller montiert. Der Rahmen des Fahrgestells besteht aus zwei Längsträgern. Je nach Hersteller hat der Rahmen des Fahrgestells unterschiedliche Gesamtbreiten, d.h. der Abstand der Rahmenlängsträger ist unterschiedlich. Bei manchen Fahrgestellen weitet sich der Fahrgestellrahmen im vorderen Bereich auf. Das führt dazu, dass die Rahmenlängsträger in ihrer Längsrichtung gekröpft sind. Um ein optimales Zusammenwirken von Fahrgestellrahmen und Mischerhilfsrahmen im Sinne von Fahrstabilität und Kraftübertragung zu erreichen, muss der Mischerhilfsrahmen dieselbe Form aufweisen wie der Fahrgestellrahmen.

Die Trommellagerböcke werden je nach Mischergröße einheitlich gefertigt. Eine Fertigung individuell auf den jeweiligen Rahmen abgestimmt wäre zu aufwendig und nicht effizient.

Da aber die Trommellagerböcke auf dem Mischerhilfsrahmen eine formschlüssige Fixierung erhalten sollen, muss diese nachträglich bei der Montage angebracht werden. Dazu sind üblicherweise geschmiedete Formstücke außen am Mischerhilfsrahmen angeschweißt. In diese Formstücke werden Zwischenstücke eingelegt. Die Trommellagerböcke werden in der gewünschten Endposition auf den Grundrahmen ausgerichtet und die Zwischenstücke am Trommellagerbock verschweißt. Danach werden die Trommellagerböcke üblicherweise mit Bügelschrauben auf dem Mischerhilfsrahmen verspannt. Üblicherweise sind vier solcher Befestigungsanordnungen an jedem der zwei Trommellagerböcke vorgesehen. Eine entsprechende Konstruktion ist aus der EP 2322332 A2 bekannt. Für den Fall, dass die Klemmkraft der Befestigungsanordnung sich vermindert, stellen die formschlüssigen Elemente sicher, dass der Mischeraufbau weiterhin sicher auf dem Mischerhilfsrahmen gehalten wird.

Nachteilig bei dieser vorbekannten Befestigung der Aufbauten auf dem Hilfsrahmen ist es, dass die Formstücke seitlich an die Profile des Mischerhilfsrahmens angeschweißt sind. Die Krafteinleitung aus dem Trommellagerbock erfolgt in das Rahmenprofil also nicht formschlüssig, sondern per Schubkraft über die Schweißnaht Formstück-Profil. Schweißnähte können Fertigungsfehler aufweisen und sind rissanfällig.

Darüber hinaus ist der Ausrichtvorgang der Trommellagerblöcke aufwendig und Fehleranfällig, da vor dem Anschweißen der Zwischenstücke keine eindeutigen Anschlagpunkte vorhanden sind. Außerdem müssen die Trommellagerböcke nach dem Ausrichten und Positionieren der Zwischenstücke nochmal angehoben werden, um diese anzuschweißen. Hierdurch entsteht ein zusätzlicher Aufwand.

Der Mischerhilfsrahmen um die Trommellagerböcke werden für einen besseren Korrosionsschutz üblicherweise als Einzelteile grundiert. Für das Anbringen der Zwischenstücke muss die Grundierung am Trommellagerbock teilweise entfernt werden. Nach dem Anschweißen der Zwischenstücke muss der Bereich um die Schweißung nachbearbeitet und erneut grundiert werden. Hiermit geht ebenfalls ein hoher Aufwand einher. Trotzdem ist der erreichbare Korrosionsschutz nicht so gut, wie bei vorab gemeinsam grundierten Teilen.

Die Profile des Mischerhilfsrahmens werden an den Außenflächen mittels Verbindungsteilen wie Schubblechen oder Befestigungskonsolen mit den Rahmenlängsträgern des Fahrgestells verbunden. Werden die Formstücke zur Befestigung der Trommellagerböcke auch an diesen Seitenflächen angebracht, kann es zu räumlichen Überschneidungen kommen. In diesem Fall entsteht ein erheblicher Zusatzaufwand, weil besondere Verbindungsteile erforderlich sind und die Zugänglichkeit beeinträchtigt ist.

Aufgabe der vorliegenden Erfindung ist es, einen gattungsgemäßen Fahrmischer dahingehend weiterzubilden, dass die Aufbauten sicher und einfach über dem Hilfsrahmen auf dem Fahrgestell des Fahrzeugs befestigt werden können.

Erfindungsgemäß wird die Aufgabe über einen Fahrmischer mit den Merkmalen des Anspruchs 1 gelöst. Demnach weist ein Fahrmischer mit Aufbauten, die über einen Hilfsrahmen auf dem Fahrgestellrahmen eines Fahrgestells befestigt sind, wobei die aufgebauten Trommellagerblöcke zur Aufnahme der Mischertrommel umfassen, am Mischerhilfsrahmen Formstücke auf, auf denen der Trommellagerbock aufliegt und die mindestens eine quer zur Längsausrichtung des Hilfsrahmens ausgerichtete Nut aufweisen, in die ein Ausrichtbolzen einlegbar ist, auf den der Trommellagerbock mit einer definierten Bohrung ausrichtbar und fixierbar ist.

Bevorzugte Ausgestaltungen ergeben sich aus den sich an den Hauptanspruch anschließenden Unteransprüchen.

Demnach erfolgt die Krafteinleitung formschlüssig in direkter Linie mit einem Steg des Grundrahmenträgers.

Besonders vorteilhaft ist ein Ausrichtbolzen einseitig mit einem der Formstücke verbunden, vorzugsweise verschweißt. Gemäß einer weiteren vorteilhaften Ausgestaltung der Erfindung können je Trommellagerbock zwei Formstücke mit mindestens einer Nut vorgesehen sein. Vorteilhaft können die anderen Befestigungspunkte einfache Auflagestücke sein.

Besonders vorteilhaft kann die Befestigung über Schaftschrauben mit Dehnhülsen erfolgen.

Gemäß der Erfindung sind die Formstücke so gestaltet, dass der Trommellagerbock im Bereich innerhalb des Profils aufliegt und die Last direkt und formschlüssig in das Profil des Grundrahmens eingeleitet wird.

Durch das Vorsehen der Nut in den Formstücken, die quer zur Längsrichtung des Grundrahmens angeordnet ist, können die Trommellagerböcke in sehr einfacher Art und Weise auf die jeweils unterschiedlichen Grundrahmen und damit auch unterschiedlichen Hilfsrahmen der verschiedenen Fahrzeuge angepasst werden. Die Trommellagerböcke erhalten an den Verbindungsflächen Zentrierbohrungen, mit definiertem Abstandsmaß. In die Zentrierbohrungen werden abgesetzte Bolzen eingesetzt, welche in der Führungsrille der Formstücke eine formschlüssige Verbindung in Längsrichtung ermöglichen. An einem der Grundrahmenträger wird vorteilhaft der Bolzen vorab mit dem Formstück verschweißt. Dadurch wird der Trommellagerbock über dem Bolzen dann in Längs- und Querrichtung fixiert. Am anderen Grundrahmenträger wird der Bolzen lose eingelegt und damit in Längsrichtung fixiert. In der Auflageebene ist der Trommellagerbock damit in allen Freiheitsgraden fixiert. Es sind somit nur zwei Formstücke mit jeweiligen Nuten erforderlich. Die anderen Befestigungspunkte können vorteilhaft als reine Auflage ausgeführt werden.

Da sich die Positionen des angeschweißten Bolzens vorab aus der Grundrahmenbreite des jeweiligen Fahrgestells und dem Abstand der Zentrierbohrungen im Trommellagerbock errechnen lässt, kann der angeschweißte Bolzen schon beim Herstellen des Grundrahmenträgers angebracht und damit kann diese gesamte Baueinheit komplett grundiert werden. Der zweite Bolzen muss nur lose eingelegt werden. Damit lässt sich der Ausrichtvorgang für die Trommellagerböcke schnell und einfach darstellen. Außerdem ist ein guter Korrosionsschutz gewährleistet.

Die Formstücke sind so ausgeführt, dass für die Befestigung der Trommellagerböcke Schaftschrauben verwendet werden können. Diese lassen sich im Gegensatz zu Bügelschrauben leichter auf definierte Vorspannwerte anziehen. Um die Gefahr des Vorspannkraftverlustes durch Setzung in der Verbindung zu senken, kann durch die Verwendung von Dehnhülsen die Klemmlänge der Schrauben erhöht werden.

Weitere Merkmale, Einzelheiten und Vorteile der Erfindung werden anhand der nachfolgenden Zeichnung näher beschrieben. Es zeigen:
- Figur 1:: einen Fahrmischer gemäß der vorliegenden Erfindung in perspektivischer Darstellung,
- Figur 2:: einen Hilfsrahmen zur Verwendung bei einem Fahrmischer gemäß der vorliegenden Erfindung,
- Figur 3:: einen Hilfsrahmen und zwei Trommellagerböcke in Explosionsdarstellung gemäß vorliegender Erfindung,
- Figuren 4 - 6:: verschiedene Detailsdarstellungen des Hilfsrahmens mit der Verbindung zu den Trommellagerböcken und
- Figuren 7 und 8:: Verbindungsdetails gemäß dem Stand der Technik.

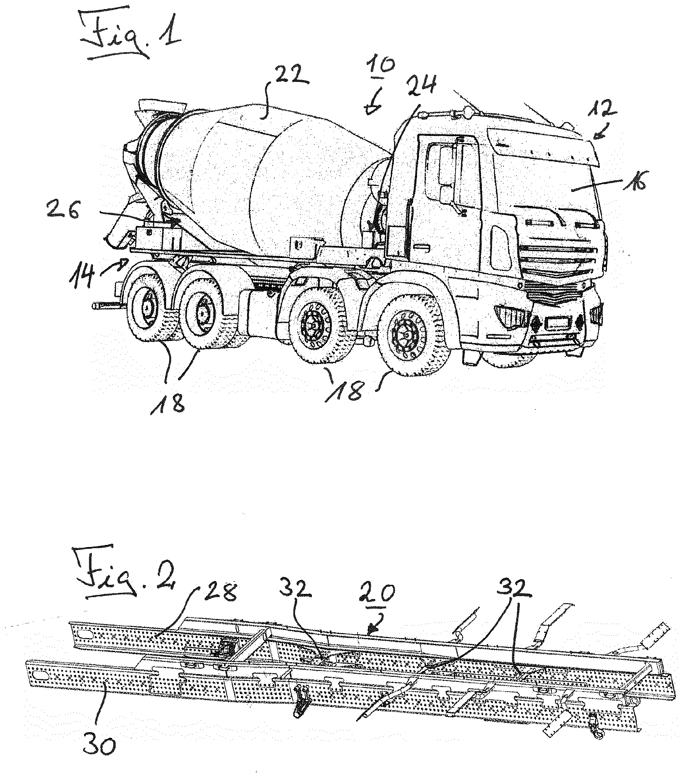

In Figur 1 ist ein Fahrmischer 10 gemäß der vorliegenden Erfindung dargestellt. Ein derartiger Fahrmischer umfasst ein Grundgerät 12 mit einem Fahrgestell 14, wobei das Grundgestell 12 im Wesentlichen wie ein normaler LKW aufgebaut ist. Dabei weist das Grundgerät eine Fahrerkabine 16, einen Antriebsmotor und mindestens zwei bereifte Achsen 18 auf. Auf dem Fahrgestell 14 des Grundgeräts 12 ist ein Mischerhilfsrahmen 20 (Figur 2) angeordnet, auf welchem die Mischertrommel 22 über vordere und hintere Trommellagerböcke 24 und 26 befestigt ist. Die Mischertrommel 22 ist am vorderen und am hinteren Trommellagerbock 24 und 26 jeweils drehbar gelagert. Am vorderen Trommellagerbock ist dabei üblicherweise der Antriebsmotor zum Drehen der Mischertrommel 22 angeordnet. Am hinteren Trommellagerbock 26 kann beispielsweise eine hier nicht näher dargestellte Laufrollenlagerung für die Mischertrommel 22 angeordnet sein sowie Anordnungen zum Befüllen und/oder Entleeren der Mischertrommel. Der Fahrmischer dient dabei dem Transport von Flüssigbeton in der Mischertrommel 22.

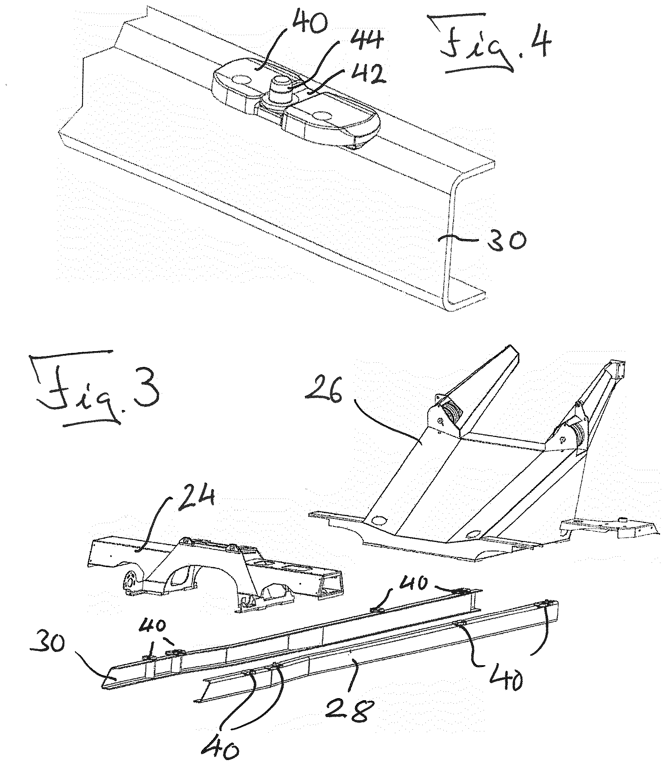

In der Figur 2 bzw. der Figur 3 ist der Mischerhilfsrahmen 30 dargestellt, welcher zwei Längsträger 28 und 30 umfasst, die über Querträger 32 miteinander verbunden werden. Die Längsträger sind dabei aus einem U-Profilelement hergestellt.

An den Längsträgern des Mischerhilfsrahmens, bzw. Hilfsrahmens 20 sind, wie in den Figuren 3 bis 6 dargestellt, Formstücke 40 angeschweißt, auf denen dann die Trommellagerböcke 24 und 26 aufliegen. An den Trommellagerböcken 24 und 26 sind entsprechende Aufnahmeplatten 41 angeschweißt.

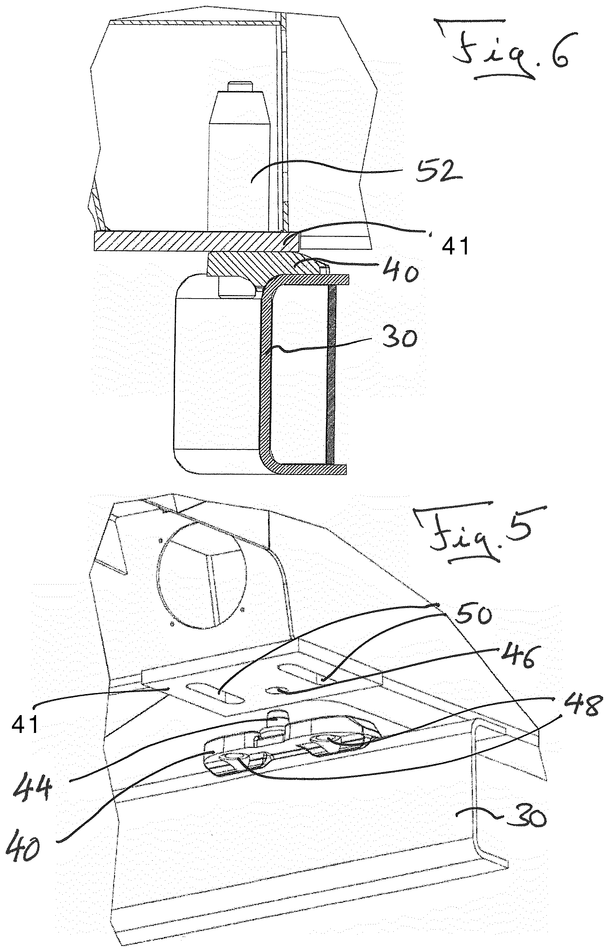

In den Figuren 4 und 5 sind jeweils Teile des Längsträgers 30 des Hilfsrahmens 20 gezeigt, an denen ein Formstück 40 angeschweißt ist. In dem Formstück 40 ist eine Quer zur Längsrichtung des Längsträgers 30 verlaufende Nut 42 vorgesehen, in welcher ein Ausrichtbolzen 44 einlegbar ist. Durch die Querverschieblichkeit des Ausrichtbolzens 44 kann der Trommellagerbock mit der entsprechend in der angeschweißten Platte 41 vorgesehenen Bohrung 46 ausrichtbar und fixierbar sein. Grundsätzlich können sämtliche Bolzen 44 in den Formstücken 40 querverschieblich gelagert sein. Eine vereinfachte Ausführungsform ergibt sich aber, wenn die Ausrichtbolzen 44 auf einer Seite beispielsweise am Grundträger 28 mit dem Formstück 40 fest verschweißt sind. Es reicht dann aus, wenn die gegenüberliegend an dem Grundträger 30 des Hilfsrahmens 20 angeordneten Formstücke mit der entsprechenden Nut 42 zur Querverschiebung der Ausrichtbolzen 44 versehen sind.

Wie in Figur 5 gezeigt, sind in den Formstücken 40 noch jeweils zwei Bohrungen 48 angeordnet, denen jeweils zwei Langlöcher 50, die in der Platte 41 vorgesehen sind, gegenüberliegen. Durch diese Bohrungen 48 bzw. Langlöcher 50 sind, wie in Figur 6 dargestellt, Schaftschrauben mit Dehnhülsen 52 gesteckt, über die die Trommellagerböcke 24 und 26 mit definiertem Vorspannwert mit dem Hilfsrahmen 20 verbunden werden können. Die Trommellagerböcke 24 und 26 werden jeweils über vier am Hilfsrahmen 20 vorgesehene Formstücke und diesen entsprechenden an den jeweiligen Trommellagerböcken 24 und 26 angeschweißten Platten 41 verbunden.

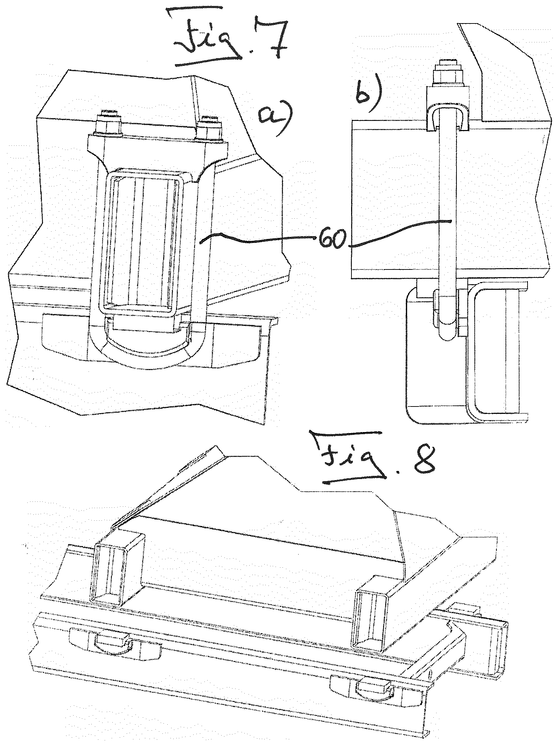

Die Figuren 7a und 7b sowie 8 zeigen jeweils Verbindungen nach dem Stand der Technik, in welchen die Trommellagerböcke Bügelschrauben 60 der Hilfsrahmen verspannt wurden.

## Patentansprüche

1. Fahrmischer (10) mit Aufbauten, die über einen Hilfsrahmen (20) auf dem Fahrgestellrahmen eines Fahrgestells (14) befestigt sind, wobei die Aufbauten Tommellagerböcke (24,26) zur Aufnahme der Mischertrommel (22) umfassen, wobei am Hilfsrahmen Formstücke (40) angeordnet sind, auf denen der Trommellagerbock aufliegt **dadurch gekennzeichnet, dass** die Formstücke (40) mindestens eine quer zur Längsausrichtung des Hilfsrahmens ausgerichtete Nut (42) aufweisen, in die ein Ausrichtbolzen (44) einlegbar ist, auf den der Trommellagerbock mit einer definierten Bohrung (46) ausrichtbar und fixierbar ist.

2. Fahrmischer nach Anspruch 1, **dadurch gekennzeichnet, dass** die Krafteinleitung formschlüssig in direkter Linie in einen Steg des Grundrahmenträgers erfolgt.

3. Fahrmischer nach Anspruch 1 oder 2, **dadurch gekennzeichnet, dass** ein Ausrichtbolzen (44) einseitig mit dem Formstück (40) verbunden, vorzugsweise verschweißt ist.

4. Fahrmischer nach einem der vorhergehenden Ansprüche, **dadurch gekennzeichnet, dass** je Trommellagerbock (24,26) zwei Formstücke (40) mit mindestens einer Nut (42) vorgesehen sind.

5. Fahrmischer nach Anspruch 4, **dadurch gekennzeichnet, dass** für die anderen Befestigungspunkte einfache Auflagestücke ausreichend sind.

6. Fahrmischer nach einem der vorhergehenden Ansprüche, **dadurch gekennzeichnet, dass** die Befestigung über Schaftschrauben mit Dehnhülsen (52) erfolgt.

## Claims

1. A truck mixer (10) having superstructures that are fastened to the chassis frame of a chassis (14) via a subframe (20), with the superstructures comprising drum support blocks (24, 26) for mounting the mixer drum (22), wherein moldings (40) on which the drum support block lies are arranged at the subframe, **characterized in that** the moldings (40) have at least one groove (42) which is aligned transversely to the longitudinal alignment of the subframe and into which an alignment pin (44) can be placed on which the drum support block can be aligned and fixed with a defined bore (46).

2. A truck mixer in accordance with claim 1, **characterized in that** the force introduction takes place with shape matching in a direct line into a web of the base frame member.

3. A truck mixer in accordance with claim 1 or claim 2, **characterized in that** an alignment pin (44) is connected, preferably welded, to the molding (40) at one side.

4. A truck mixer in accordance with one of the preceding claims, **characterized in that** two moldings (40) per drum support block (24, 26) are provided with at least one groove (42).

5. A truck mixer in accordance with claim 4, **characterized in that** simple support pieces are sufficient for the other fastening points.

6. A truck mixer in accordance with one of the preceding claims, **characterized in that** the fastening takes place via set screws having expansion sleeves (52).

## Revendications

1. Camion malaxeur (10) comprenant des superstructures qui sont fixées sur le cadre de châssis d'un châssis (14) par l'intermédiaire d'un cadre auxiliaire (20), les superstructures comprenant des supports de palier de tambour (24, 26) pour le logement du tambour malaxeur (22), des pièces façonnées (40) étant disposées sur le cadre auxiliaire, sur lesquelles repose le support de palier de tambour, **caractérisé en ce que** les pièces façonnées (40) présentent au moins une rainure (42) orientée transversalement par rapport à l'orientation longitudinale du cadre auxiliaire, dans laquelle rainure un boulon d'alignement (44) peut être posé, sur lequel le support de palier de tambour peut être orienté et fixé à l'aide d'un alésage (46) défini.

2. Camion malaxeur selon la revendication 1, **caractérisé en ce que** la transmission de force est réalisée par adhérence de forme en ligne directe dans une nervure du support de cadre de base.

3. Camion malaxeur selon la revendication 1 ou 2, **caractérisé en ce qu'**un boulon d'orientation (44) est relié d'une seule pièce, de préférence soudé, à la pièce façonnée (40).

4. Camion malaxeur selon l'une quelconque des revendications précédentes, **caractérisé en ce que** deux pièces façonnées (40) comprenant au moins une rainure (42) sont ménagées par support de palier de tambour (24, 26).

5. Camion malaxeur selon la revendication 4, **caractérisé en ce que** des pièces d'appui simples sont suffisantes pour les autres points de fixation.

6. Camion malaxeur selon l'une quelconque des revendications précédentes, **caractérisé en ce que** la fixation est réalisée par l'intermédiaire de vis sans tête munies de douilles rotatives (52).
